(19) Europäisches Patentamt
European Patent Office
Office européen des brevets

(11) EP 1 021 000 B1

(12) EUROPÄISCHE PATENTSCHRIFT

(45) Veröffentlichungstag und Bekanntmachung des Hinweises auf die Patenterteilung:
**04.05.2005 Patentblatt 2005/18**

(51) Int Cl.[7]: **H04B 7/08**

(21) Anmeldenummer: **99122901.4**

(22) Anmeldetag: **18.11.1999**

(54) **Scanning-Diversity-Antennensystem für Fahrzeuge**

Scanning-diversity-antenna system for motor vehicles

Système d'antennes de balayage en diversité pour véhicules

(84) Benannte Vertragsstaaten:
**AT BE CH CY DE DK ES FI FR GB GR IE IT LI LU MC NL PT SE**

(30) Priorität: **17.12.1998 DE 19858465**

(43) Veröffentlichungstag der Anmeldung:
**19.07.2000 Patentblatt 2000/29**

(73) Patentinhaber: **FUBA Automotive GmbH & Co. KG**
**31162 Bad Salzdetfurth (DE)**

(72) Erfinder:
- **Lindenmeier, Heinz**
  **82152 Planegg (DE)**
- **Hopf, Jochen**
  **85540 Haar (DE)**
- **Reiter, Leopold**
  **82205 Gilching (DE)**

(56) Entgegenhaltungen:
**EP-A- 0 792 031**
**EP-A- 0 998 058**
**DE-A- 4 403 612**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 021 000 B1

## Beschreibung

Die Erfindung betrifft ein Scanning-Diversity-Antennensystem für Fahrzeuge mit einer Mehrantennenanordnung nach dem Oberbegriff des Anspruchs 1.

Schaltungsanordnungen dieser Art sind bekannt aus dem DE-Patent Nr. 35 17 247. Bei der dort beschriebenen Antennendiversity-Empfangsanlage zum Eliminieren von Störungen beim Empfang frequenzmodulierter Rundfunksendungen wird einem Diversityprozessor eine Anzahl von Antennensignalen zugeführt, von denen zu jedem Zeitpunkt ein ausgewähltes Antennensignal zum Empfänger durchgeschaltet ist. Aus diesem Signal wird im Empfänger im Zwischenfrequenzbereich (ZF) durch Umsetzung ein Signal abgeleitet, das dem Diversityprozessor zum Erkennen von Störungen zugeführt wird. Bei Erkennen einer Störung werden im Diversityprozessor Schaltsignale zum Umschalten auf ein anderes Antennensignal abgeleitet. Auf diese Weise werden audiofrequente Störungen, die durch Mehrwegeempfang bedingt sind, dann weitgehend vermieden, wenn ausreichende Empfangsverhältnisse vorliegen.

In Gebieten mit schlechten Empfangsverhältnissen kommt es jedoch mit Schaltungsanordnungen nach DE 35 17 247 zu häufigem Umschalten und zu damit verbundenen Störungen durch die Schaltvorgänge selbst. Insbesondere in Schwachsignalgebieten und bei guter Wiedergabequalität im Kraftfahrzeug wird die Hörqualität durch diese Umschaltstörungen beeinträchtigt.

Bei frequenzmodulierten Rundfunksignalen (z. B. UKW-Empfang oder Fernseh-Tonempfang) ergibt sich eine Empfangsstörung bei einer aktuell aufgeschalteten Antenne durch die Überlagerung mehrerer Teilwellen mit unterschiedlichen Amplituden sowie Phasen- und Laufzeitdifferenzen am Empfangsort. Die dadurch entstehenden Pegeleinbrüche sind mit Frequenzstörhubspitzen korreliert und verursachen Signalverzerrungen in Abhängigkeit vom Modulationsinhalt im Hörfrequenzbereich. Die minimale Prüfzeit entspricht daher der Störerkennungszeit. Erkennt der Störungsdetektor auf Störung, so veranlaßt der Diversity-Prozessor ein Weiterschalten, und die anderen zur Verfügung stehenden Antennensignale und gegebenenfalls deren in einer Antennenmatrix gebildete Linearkombinationen werden geprüft.

Wenn alle diese HF-Signale Störungen aufweisen, werden ständig sämtliche HF-Signale nacheinander zum Empfänger durchgeschaltet. Da sich dieser Suchprozeß in schneller Folge wiederholt, überlagert sich dem Empfangssignal auf der NF-Ebene unter speziellen Empfangsbedingungen ein wahrnehmbares Störsignal als "Knistern".

In DE-Patent Nr. 44 03 612 werden Maßnahmen beschrieben, mit denen in besonders ungünstigen Empfangslagen die Weiterschalthäufigkeit begrenzen werden soll. Dies geschieht mit Hilfe einer Stopp-Einrichtung, die, angepaßt an die Empfangsbedingungen, bei zu häufiger Störungsanzeige durch den Diversityprozessor das Weiterschalten unterbindet. Zwar werden auf diese Weise die durch das Umschalten hervorgerufenen Störungen reduziert, naturgemäß wird jedoch das Empfangssignal nunmehr durch die Empfangsstörungen, die der Diversityprozessor zwar noch anzeigt, die aber nicht vermindert werden, beeinträchtigt.

Die vorliegende Erfindung nimmt Bezug auf die vorhergehende europäische Patentanmeldung Nr. 99 119 878.9, in der ein Lösungsansatz beschrieben wird, um mit einer Zusatzfunktion bei einem an sich bekannten Scanning-Antennen-Diversitysystem die Schalthäufigkeit zu verringern. Dabei wird vorgeschlagen, das Kriterium Empfangsstörungen durch das Kriterium Signalpegel zu ergänzen. In den Signalweg des Empfangssignals wird eine Pegelvergleichseinrichtung eingeschaltet, über die an Hand des zusätzlichen Kriteriums gewissermaßen eine Vorauswahl unter den zur Verfügung stehenden Antennensignalen getroffen wird. Dem Prinzip liegt die Erfahrung zugrunde, daß ein Signal mit einem hohen - oder einem vergleichsweise höheren - Pegel mit hoher Wahrscheinlichkeit weniger Störungen aufweist als ein Signal mit vergleichsweise niedrigem Pegel. Während also beim herkömmlichen Antennendiversity bei gestörtem Empfang nacheinander von Antenne zu Antenne geschaltet wird, um ein weniger gestörtes Signal zu finden, wird hier eine Verbesserung quasi durch Vorgabe einer Priorität in Abhängigkeit vom Pegel erreicht.

Das System arbeitet gewissermaßen seriell. Daraus resultiert, daß sich weiterhin eine gewisse Unruhe nicht vermeiden läßt. Denn es muß, für den Vorgang der Pegelprüfung und des Vergleichs, der Hauptempfang unterbrochen werden. Die zum Ausgleich dieses Nachteils vorgeschlagenen Maßnahmen, wie eine Unterbrechnung der herkömmlichen Diversityfunktion während des Pegelvergleichsintervalls, eine Stummschaltung während des Pegelvergleichsintervalls sowie eine Abschaltung der Pegelvergleichsfunktion bei zu hoher Schalthäufigkeit, bedeuten eine Erhöhung des Aufwands an Bauteilen und Modulen und lösen das Problem doch nicht mit der nötigen Konsequenz.

Die vorliegende Erfindung hat zur Aufgabe, ein Scanning-Antennen-Diversitysystem der gattungsgemäßen, zuletzt beschriebenen Art weiter zu entwickeln. Es ist die Auswahlfunktion des Systems zu verbessern, ohne daß ein zusätzliches Auswahlkriterium seinerseits das Hauptsignal bzw. seine Wiedergabe beeinträchtigt.

Diese Aufgabe wird erfindungsgemäß mit den im kennzeichnenden Teil des Hauptanspruchs angegebenen Merkmalen gelöst. Der Unteranspruch enthält eine bevorzugte Ausführungsform.

Der besondere Vorteil der Erfindung besteht darin, daß zur Feststellung des Empfangssignals mit dem jeweils größten Pegel und bei den weiteren Verfahrensschritten nicht in die Signalkette des mit den Lautsprechern verbundenen Empfängers eingegriffen werden muß. Die Signalenergie, die der Maximalpegelindikator für die erfindungsgemäße Funktion benötigt, stellt einen kleinen Anteil von jedem der zur Verfügung stehenden Empfangssignale dar und wird von den Antennensignalen vor dem Verarbeitungspfad für das Nutzsignal zur separaten Verarbeitung auf einem parallelen Pfad abgezweigt.

Die Vorteile der Erfindung resultieren weiterhin daraus, daß unter den vom Diversityprozessor bezüglich der Störungsfreiheit auszuwählenden Empfangssignalen zu jedem Zeitpunkt dasjenige Signal in der Umschaltstellung $U_{Smax}$ zur Verfügung steht, das auf Grund der Vorselektion unter den verfügbaren Empfangssignalen den größten Pegel liefert und demzufolge mit kleinerer Wahrscheinlichkeit Störungen enthält, und dies, ohne daß die Vorselektion ihrerseits noch Beeinträchtigungen verursacht. Damit wird die Störungswahrscheinlichkeit gegenüber dem erwähnten, ebenfalls mit einer Vorselektion arbeitenden System nochmals um ein nennenswertes Maß verringert.
Der Schaltungsaufwand zur Realisierung des erfindungsgemäßen vorteilhaften Prinzips ist geringer als der Aufwand, der bei der vorbeschriebenen Lösung zur Minderung der trotz bzw. mit der Vorselektion auftretenden Beeinträchtigungen erforderlich ist.

Die Erfindung wird im folgenden an Hand von Ausführungsbeispielen näher erläutert. In der zugehörigen Zeichnung zeigen:

- Figur 1. Antennendiversity, Stand der Technik, im Vergleich zur vorliegenden Erfindung
- Figur 2. Erfindungsgemäßes System mit Pegelvergleichstuner
- Figur 3. Einfäche logische Schalteinrichtung eines erfindungsgemäßen Systems
- Figur 4. Erfindungsgemäßes System mit elektronischem Weiterschalter
- Figur 5. Empfangssignal-Pegel im Vergleich

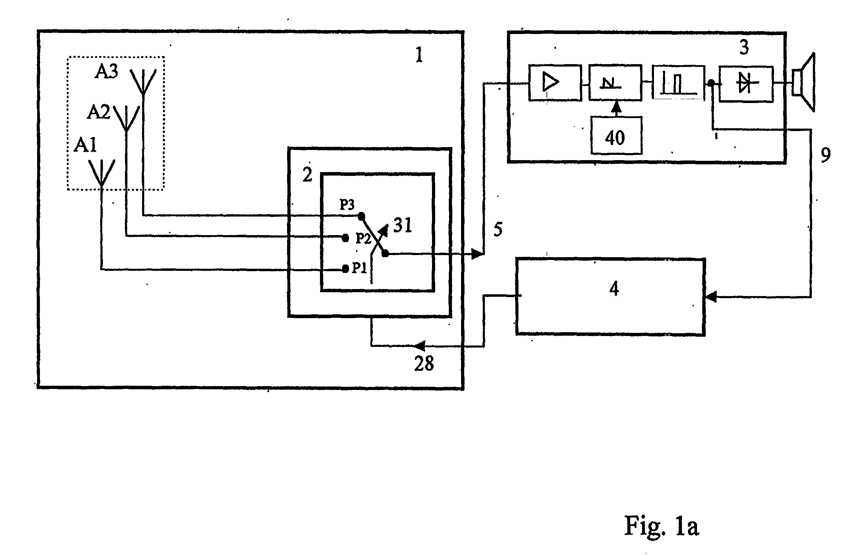

Figur 1a zeigt ein Scanning-Antennen-Diversitysystem mit Mehrantennenanlage 1, Empfänger 3 und Diversityprozessor 4 nach dem Stand der Technik, bei dem durch zyklisches Weiterschalten unterschiedliche Empfangssignale 5 mittels der Weiterschaltsignale bzw. -pulse 28 zum Empfänger 3 durchgeschaltet werden.

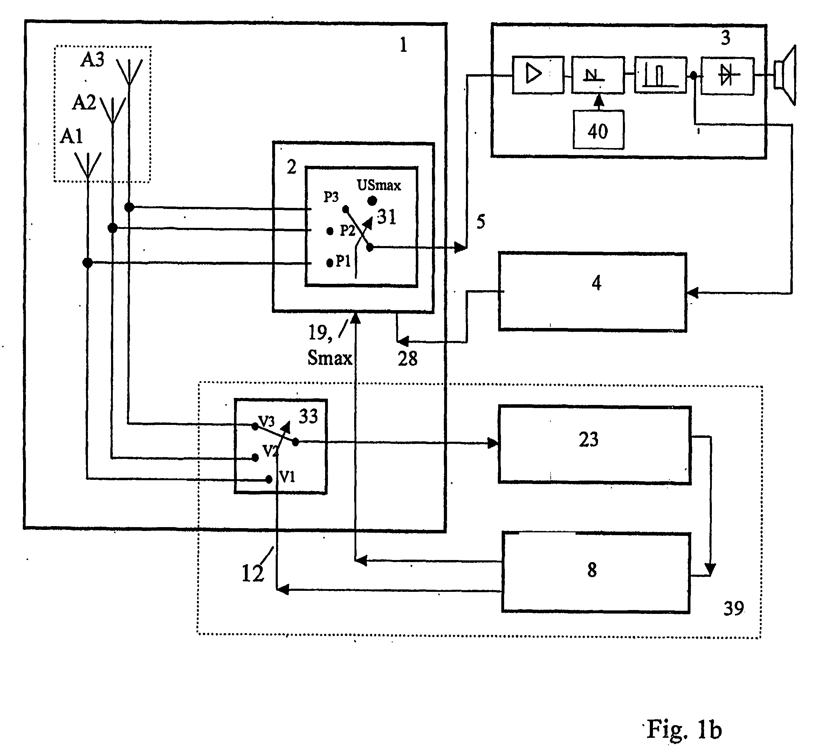

Figur 1b zeigt ein Scanning-Antennen-Diversitysystem wie in Fig. 1a, jedoch erweitert um den erfindungsgemäßen Maximalpegel-Schaltmodus, der in der Umschaltstellung $U_{Smax}$ initiiert ist. Mit Hilfe des Maximalpegelindikators 39, der aus dem durch das Umschaltsignal 12 gesteuerten Pegelvergleichsschalter 33, dem Pegelindikator 23 und der Pegelvergleichseinrichtung 8 besteht, wird das Adreßsignal 19 als Ausgangssignal des Maximalpegelindikators 39 der logischen Schalteinrichtung 2 zugeführt. Dem Pegelvergleichsschalter werden hierzu die Antennensignale $A_{1-n}$ parallel zugeführt.
Das Adreßsignal 19 liefert im Maximalpegel-Schaltmodus kontinuierlich die aktualisierte Maximalpegel-Schaltstellung $S_{max}$ zum Durchschalten desjenigen Empfangssignals 5, das den größten Pegel hat. Bei Auftreten einer Störung in der Umschaltstellung $U_{Smax}$ und deren Anzeige im Diversity-Prozessor 4 wird vom Maximalpegel-Schaltmodus wieder in den zyklischen Weiterschaltmodus zurückgeschaltet. In der Umschaltstellung $U_{Smax}$ hingegen wird in aller Regel keine zyklische Weiterschaltung erfolgen, weil während der Fahrt jeweils das Empfangssignal 5 mit dem größten HF-Pegel zum Empfänger 3 durchgeschaltet wird.

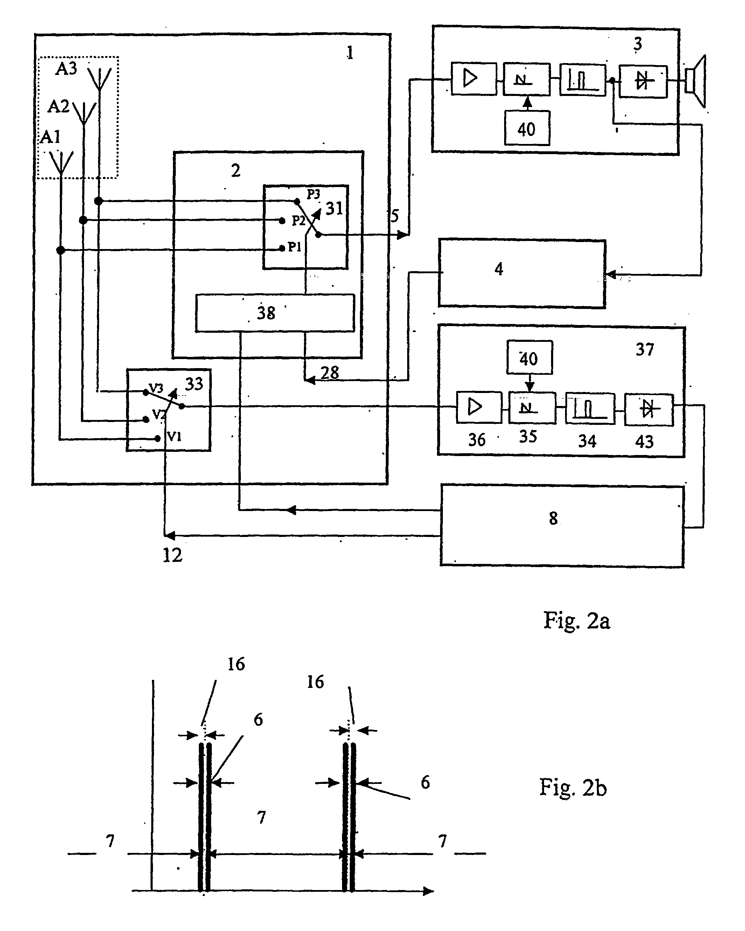

Figur 2a zeigt ein erfindungsgemäßes Scanning-Antennen-Diversitysystem, bei dem der Pegelindikator 23 des Maximalpegelindikators 39 als Pegelvergleichstuner 37 ausgeführt ist und der elektronische Weiterschalter 31 über eine Weiterschalt-Adreß-Logik 38 angesteuert wird, der die Weiterschaltpulse 28 des Diversityprozessors 4 und die Maximalpegelschaltstellung $S_{max}$ der Pegelvergleichseinrichtung 8 zugeführt werden.

Figur 2b zeigt Sample-Pulse für den Fall eines Pegelvergleichs gemäß zweier Schaltstellungen innerhalb der Pegelvergleichszeit 6 von etwa doppelter Länge der Sample-Zeit 16 nach jedem Zeitabschnitt 7.

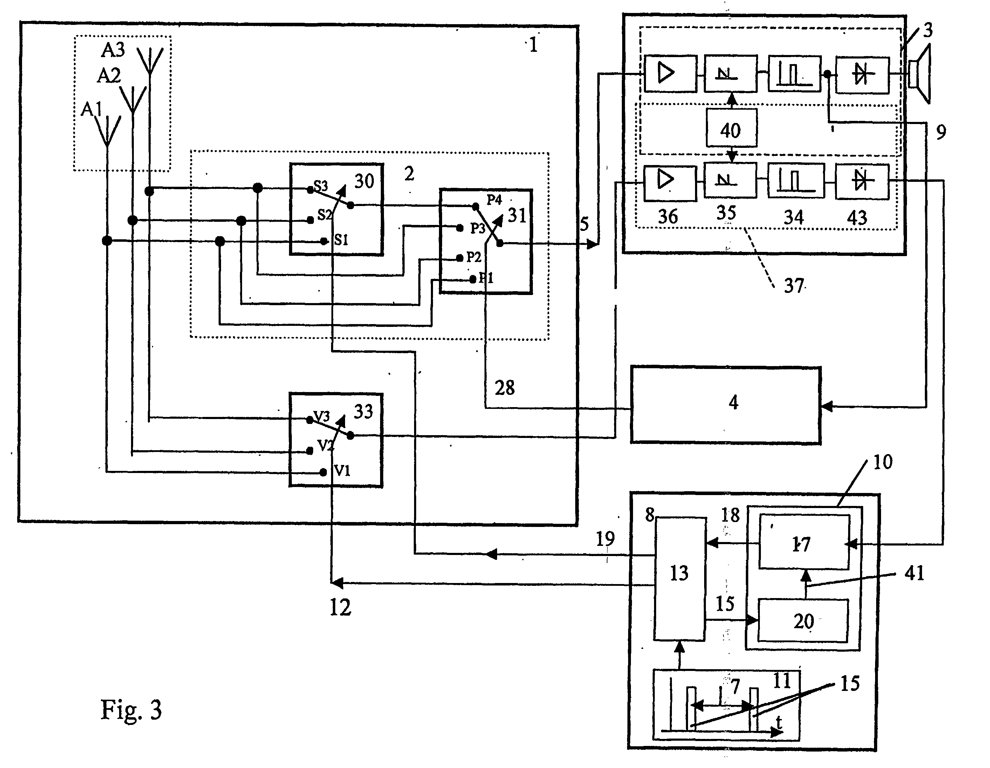

Figur 3 zeigt das Beispiel eines Scanning-Antennen-Diversitysystems mit einfacher logischer Schalteinrichtung 2, bestehend aus einem elektronischen Weiterschalter 31 und einem adressierbaren elektronischen Umschalter 30, dessen Eingänge an die Antennensignale $A_1$ ... $A_3$ angeschlossen sind. Während der Pegelvergleichszeit 6 wurde die Maximalpegel-Schaltstellung $S_{max}$ (im Beispiel $S_{max} = S_3$) aus den möglichen Schaltstellungen $S_1$ ... $S_3$ ermittelt und jeweils für die Dauer eines Zeitabschnitts 7 eingestellt und das Ausgangssignal des elektronischen Umschalters 30 einem der Eingänge (im Beispiel $P_4=U_{Smax}$) des elektronischen Weiterschalters 31 zugeführt. Den übrigen Eingängen (im Beispiel $P_1$ ... $P_3$) des elektronischen Weiterschalters 31 werden die diskreten Empfangssignale der Antennen $A_1$, $A_2$, $A_3$ zugeführt. Der Diversityprozessor 4 schaltet bei Feststellung einer Störung im ZF-Signal des Superhet-Empfängers 3 den elektronischen Weiterschalter 31 um jeweils eine Schaltstellung weiter. Über den mittels Umschaltsignal 12 gesteuerten Pegelvergleichsschalter 33 wird dem Pegelvergleichstuner 37 ein Antennensignal zugeführt und in der Pegelvergleichseinrichtung 8 wird die Maximalpegel-Schaltstellung (im Beispiel $S_{max}=S_3$) kontinuierlich ermittelt. Zur Aufwandsminimierung wird das Signal des Oszillators 40 sowohl im Empfänger 3 als auch im Pegelvergleichstuner 37 verwendet. Die Pegelvergleichseinrichtung besteht ihrerseits aus einem Zeitintervallgeber 11, der die Pegelvergleichspulse 15 in periodisch wiederkehrenden Zeitintervallen 7 generiert. Über eine Logikschaltung 13 werden die Pegelvergleichspulse dem Sample-Zeitgeber 20 zugeführt. Dieser generiert die Sample- und Holdpulse 41, die dem Sample- und Hold-Entscheider 17 übermittelt werden.

Der Sample- und Hold-Entscheider liefert ein Binärsignal 18 an die Logikschaltung 13, die die Maximalpegel-Schaltstellung 19 (entsprechend $S_{max}$) zum elektronischen Umschalter 30 leitet.

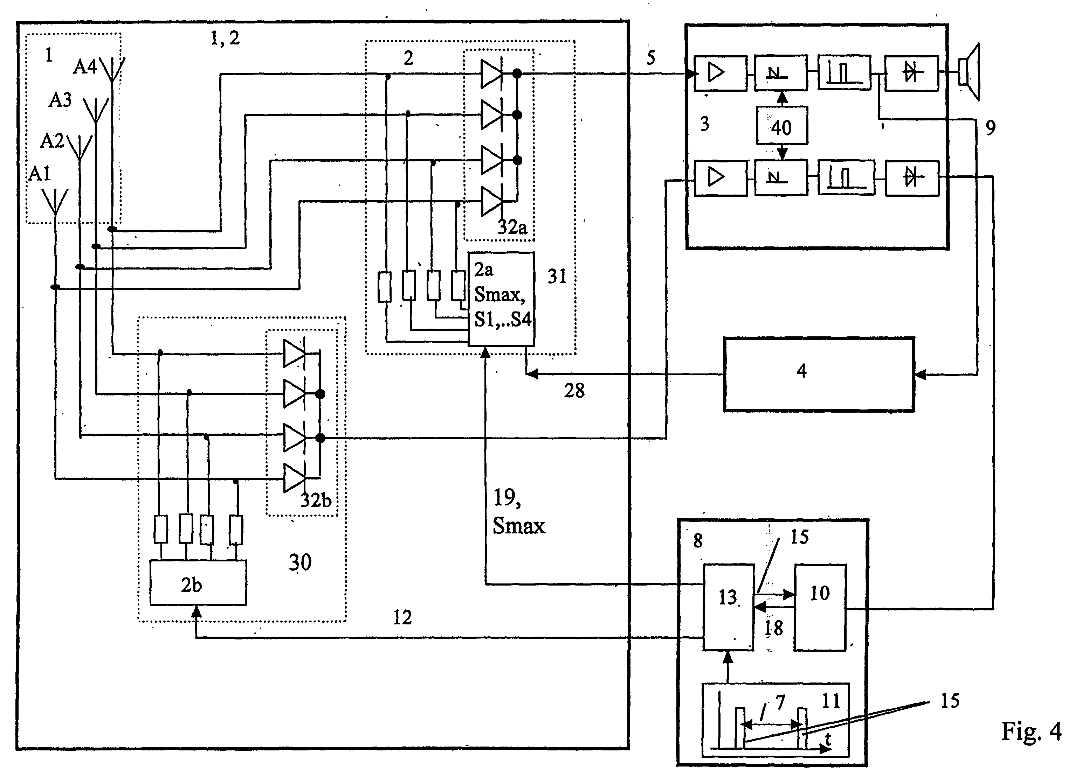

Figur 4 zeigt das Beispiel eines Scanning-Antennen-Diversitysystems mit einer aus einem Mehr-Diodenschalter 32a und aus einer Weiterschaltlogik 2a bestehenden logischen Schalteinrichtung 2, die den elektronischen Weiterschalter 31 darstellt. Der elektronische Umschalter 30 besteht aus einer Umschaltlogik 2b und dem Mehr-Diodenschalter 32b. Durch alternatives Aktivieren einer der Dioden mit der Umschaltlogik 2b durch das Umschaltsignal 12 wird der Maximalpegel-Schaltmodus eingeleitet. Dabei wird während der Pegelvergleichszeit 6 das Adressignal 19 für die Maximalpegel-Schaltstellung $S_{max}$ ermittelt und in der Weiterschaltlogik 2a die Adresse der Maximalpegel-Schaltstellung $S_{max}$ durch Steuerung mit dem Adressignal 19 in der dort bestehenden Adressenliste $S_{max}$, $S_1$, $S_2$, $S_3$, $S_4$ aktualisiert abgelegt. $S_{max}$ entspricht dabei jeweils einer der Schaltstellungen $S_1$, $S_2$ ,$S_3$ oder $S_4$. Bei Auftreten einer Störung wird durch Aktivieren des Diversity-Prozessors 4 ein Weiterschaltpuls 28 während eines Zeitintervalls 7 am Ausgang des Diversityprozessors 4 gebildet. Dadurch wird der Weiterschaltmodus aktiviert, und die Adressenliste wird jeweils um eine weitere Position durch Aktivieren der dazugehörigen Diode abgearbeitet. Die Logikschaltung 13 kann vorteilhaft so gestaltet werden, daß die Diodenschalter 32a und 32b nicht zum gleichen Zeitpunkt dasselbe Antennensignal durchschalten.

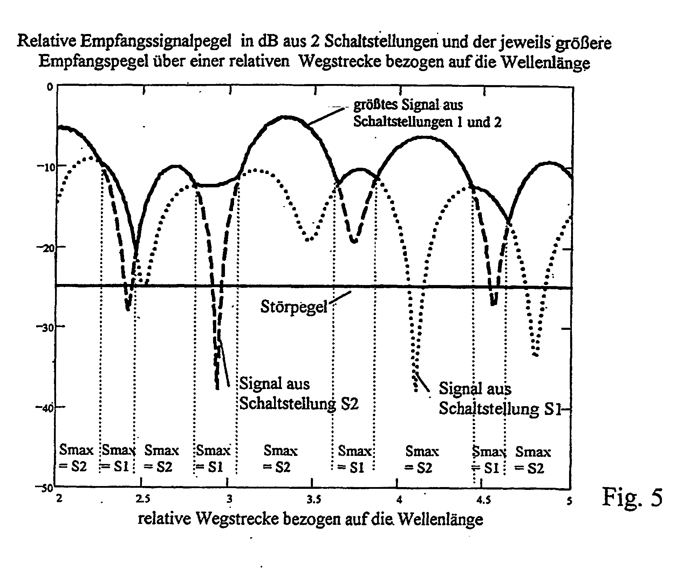

Figur 5 zeigt relative Empfangssignalpegel in dB aus 2 Schaltstellungen und den jeweils größeren Empfangspegel über einer relativen Wegstrecke, bezogen auf die Wellenlänge

Es ist nochmals auf Figur 1b zurückzukommen. Der grundsätzliche Aufbau des dort gezeigten erfindungsgemäßen Scanning-Antennen-Diversitysystems ist bereits erläutert worden. Es ist dies ein nahezu beliebiges Mehrantennensystem mit Antennensignalen $A_1$, $A_2$, $A_3$ ... und der logischen Schalteinrichtung 2, das zu jedem Zeitpunkt ein Empfangssignal 5 an den Empfänger 3 abgibt. Bei unterschiedlichen diskret verfügbaren Schaltstellungen $S_1$, $S_2$ ... ergeben sich somit bekannterweise unterschiedliche Empfangssignale 5, wie es aus DE-Patent Nr. 44 03 612 und aus DE-Patent Nr. 196 07 045 bekannt ist. Unterschiedliche Empfangssignale 5, wie in Figur 1 von DE 44 03 612 gezeigt, können aber auch aus Linearkombinationen der Antennensignale mit Hilfe einer Antennenmatrix (dort Position 10) gebildet werden. Der Vorteil von Scanning-Antennen-Diversitysystemen dieser Art ist der geringe Aufwand im Empfänger 3, der keine Mehrfachtuner für einzelne jede Antenne oder ähnlich aufwendige Zusatzeinrichtungen erfordert und mit geringem Aufwand anhand unterschiedlicher Schaltstellungen $S_1$, $S_2$ ... die Ausbildung einer Vielzahl verschiedener Empfangssignale 5 ermöglicht. Als Diversityprozessor 4 eignet sich besonders ein Prozessortyp, der über einen extrem schnellen Störungsdetektor verfügt. Solch ein Prozessor reagiert auf eine Störung mit einer Indikationszeit von z.B. etwa 30 Mikrosekunden. Die Indikationszeit wird im wesentlichen von der ZF-Bandbreite des Empfängers 3 bestimmt.

Die grundsätzliche Wirkungsweise der vorliegenden Erfindung kann anschaulich anhand der Figur 5 durch Betrachtung der Empfangssignale 5 erläutert werden, die sich für zwei unterschiedliche Schaltstellungen $S_1$ und $S_2$ über der mit dem Fahrzeug zurückgelegten, auf die Wellenlänge Lambda der Empfangsfrequenz f bezogenen Wegstrecke ergeben. Diese ist für den Fall eines Störpegels, der nennenswert unter dem Medianwert der beiden Empfangssignale 5 liegt, dargestellt. Jedes der beiden Empfangssignale 5 weist die bekannten, durch den Mehrwegeempfang bedingten Pegeleinbrüche auf Ohne die Maßnahmen der vorliegenden Erfindung würde der Diversityprozessor 4 dann in die jeweils andere Schaltstellung umschalten, wenn für das Empfangssignal 5 im Bereich der Pegeleinbrüche der Störabstand zu gering wäre. Dies hat zur Folge, daß bei den in der Figur 2 beispielhaft dargestellten Empfangsverhältnissen über die betrachtete Wegstrecke etwa 6 Umschaltungen erfolgen. Erfindungsgemäß wird nun mit Hilfe der Pegelvergleichseinrichtung 8 in der logischen Schalteinrichtung 2 nach jedem der zyklischen Pegelvergleichsvorgänge, d.h. während des jeweils darauffolgenden Zeitintervalls 7, das größere der beiden Empfangssignale 5 neben den diskret verfügbaren Schaltstellungen $S_1$,$S_2$ zusätzlich als gesonderte Maximalpegel-Schaltstellung $S_{max}$ zur Auswahl verfügbar gemacht. Bei einer Störsituation wie in Figur 5 wird dieses jeweils größere Empfangssignal 5 aus den Schaltstellungen $S_1$, $S_2$ keine Aktivität im Diversityprozessor 4 auslösen, da es zu jedem Zeitpunkt nennenswert über dem Störpegel liegt. In Figur 5 ist unten der Wechsel der Schaltstellungen angegeben, mit dem die Maximalpegel-Schaltstellung $S_{max}$ in den verschiedenen Wegbereichen gebildet ist. Der Wechsel selbst erfolgt jeweils durch schnelles Umschalten. Bei zyklischer Prüfung der Empfangssignale 5 gemäß den Schaltstellungen $S_1$, $S_2$, $S_{max}$ während der Zeitintervalle 7 wird der Diversityprozessor 4 auf Grund der kleineren Wahrscheinlichkeit des Auftretens einer Störung in aller Regel wesentlich länger bei der Schaltstellung $S_{max}$ verharren als in den Schaltstellungen $S_1$, $S_2$. Damit ist die Umschalthäufigkeit wesentlich reduziert.

In der Darstellung in Figur 5 wurde vorausgesetzt, daß die zyklisch wiederkehrenden Zeitintervalle 7 einige Größenordnungen kürzer gewählt sind als die Zeitdauer, die das Fahrzeug benötigt, um eine Wegstrecke von einer halben Wellenlänge entsprdechend der Empfangsfrequenz f zurückzulegen, so daß die Zeitintervalle 7 dort in der Fig. 5 nicht erkennbar sind. Erfindungsgemäße Vorteile lassen sich noch mit Zeitintervallen 7 erreichen, während deren sich das Fahrzeug um 1/5 der Wellenlänge $\lambda$ fortbewegt. In der Praxis wird man jedoch anstreben, daß sich bei einer Fortbewegung um eine halbe Wellenlänge λ mindestens 10 Zeitintervalle 7 ergeben. Ist v die Fahrgeschwindigkeit, dann kann als Richtwert für das Zeitintervall 7 = $T_i$ gelten:

$$T_i \leq \lambda/(2*10*v)$$

Die Pegelvergleichszeit 6 = $T_p$ ist wiederum wesentlich kleiner zu realisieren als $T_i$. Bei der in der Praxis gegebenen Vernachlässigbarkeit der reinen Umschaltzeiten ergibt sich die Zykluszeit $T_z$ für den gesamten Vorgang zu:

$$T_z \approx T_i$$

und die Zyklusfrequenz zu:

$$f_z = 1/T_z \text{ d.h. angenähert } 1/T_i$$

Damit ist die Zyklusfrequenz größer als die Richtgröße

$$f_{zmin} = 2^* v_{kmh} * f_{MHz}/ 100 \text{ in Hz}$$

zu wählen.
Im UKW-Frequenzbereich mit $f_{MHz}$ = 100 entspricht somit der Richtwert für die minimale Zyklusfrequenz $f_{zmin}$ in Hz etwa der zweifachen Fahrgeschwindigkeit in km/h.

Die Erfindung kann vorteilhaft und mit geringem Aufwand auch auf eine große Anzahl verfügbarer Schaltstellungen angewandt werden. Das Empfangssignal 5 gemäß der Maximalpegel-Schaltstellung $S_{max}$ wird auf Grund der sich unablässig ändernden Pegelverhältnisse an den Antennen durch Pegelvorauswahl aus einer Vielzahl von Antennensignalen gewonnen. Je größer die Anzahl der verfügbaren unterschiedlichen Schaltstellungen mit unterschiedlichem Empfangssignal 5 ist, umso kleiner sind die Einbrüche im Verlauf des Empfangssignals 5 bei der Maximalpegel-Schaltstellung $S_{max}$. Wichtig ist dabei insbesondere in Empfangsgebieten mit kleinen bis mittleren Signalpegeln, daß der nach einem Störungskriterium arbeitende Diversityprozessor 4 zu keiner Zeit blockiert ist.

Mit der Erfindung wird der zusätzliche Vorteil erzielt, daß auch der mittlere Signal/Stör-Abstand des Empfangssignals 5 mit dem Prinzip des Maximalpegel-Vorrangs nennenswert verbessert wird. Aus der Vorselektion der Maximalpegel-Schaltstellung $S_{max}$ aus den verfügbaren Schaltstellungen folgt, daß das zugehörige Empfangssignal 5 bei einem Pegeleinbruch weit weniger beeinträchtigt wird und mit großer Häufigkeit bei immer noch gutem Signal/Stör-Abstand sehr schnell von einer günstigeren Schaltstellung - dem jeweils aktualisierten $S_{max}$ - abgelöst wird.

Ein ebenfalls besonders Vorteil der vorliegenden Erfindung beruht auf der Ermittlung der Maximalpegel-Schaltstellung, ohne daß dem Empfangssignal 5 Hilfssignale zugefügt werden oder daß diese hierfür mit einem Hilfssignal moduliert werden müssen. Auf Grund der bei der Übertragung auf der Funkstrecke auftretenden linearen Verzerrungen führen solche Signale in manchen Empfangssituationen infolge von Bandspreizungseffekten zu unerwünschten Empfangsverzerrungen.

**Liste der Bezeichnungen**

Mehrantennenanlage (1)
Antennensignale (A1,A2,A3,...)
logische Schalteinrichtung (2)
Weiterschaltlogik (2a)
Umschaltlogik (2b)
Empfänger (3)
Diversityprozessor (4)
Empfangssignal (5)
Pegelvergleichszeit (6)
Zeitintervall (7)
diskret verfügbaren Schaltstellungen (S1,S2...), (P1,P2,..)
Maximalpegel-Schaltstellung (Smax)
Pegelvergleichseinrichtung (8)
abgeleitetes Empfangssignal (9)
Pegelkomparator (10)
Zeitintervallgeber (11)
Umschaltsignal (12)
Logikschaltung (13)
Einstellsignal (14)
Pegelvergleichspuls (15)
Sample-Zeit (16)
Sample- und Hold-Entscheider (17)
Binärsignal (18)
Adressignal (19)
Sample-Zeitgeber (20)
Halteeingang (21)
elektrisches Tachometersignal (22)
Pegelindikator (23)
Stop-Schaltung (24)
Grenzpegel (25)
Pulszähler (26)
Pulsfrequenzgrenzwert (27)
Weiterschaltpulse (28)
Abschalteinrichtung (29)
elektronischer Umschalter (30)
elektronischer Weiterschalter (31)
Mehr-Diodenschalter (32)
Pegelvergleichsschalter (33)
ZF-Filter (34)
Mischer (35)
Selektiver Verstärker (36)

Pegelvergleichstuner (37)
Weiterschalt-Adreß-Logik (38)
Maximalpegelindikator (39)
Oszillator (40)
Sample- und Hold-Pulse (41)
Liste der Schaltstellungsadressen (42)
Gleichrichter (43)

**Patentansprüche**

**1.** Scanning-Diversity-Antennensystem für Fahrzeuge mit einer Mehrantennenanlage (1) mit

- mindestens zwei Antennen,
- einer steuerbaren logischen Schalteinrichtung (2), der die Antennensignale ($A_{1-n}$) und gegebenenfalls deren in einer Antennenmatrix gebildete Linearkombinationen zugeführt werden und die mit unterschiedlichen Schaltstellungen jeweils unterschiedliche Empfangssignale (5) zum Empfänger (3) durchschaltet,
- einem Diversityprozessor (4), der vom Empfänger (3) mit einem aus dem Empfangssignal (5) abgeleiteten Empfangssignal (9) angesteuert wird, und der bei Vorliegen einer Empfangsstörung die logische Schalteinrichtung (2) in eine andere Schaltstellung zyklisch weiterschaltet sowie
- einer Signalpegel-Vergleichseinrichtung (8), die eine Maximalpegel-Schaltstellung ($S_{max}$) ermitteln kann, die dem stärksten Empfangssignal entspricht und die zusätzlich beim Durchschalten der Empfangssignale (5) zum Empfänger (3) berücksichtigt wird, wobei
- in der logischen Schalteinrichtung (2) eine Umschaltstellung ($U_{Smax}$) zum Umschalten in den Maximalpegel-Schaltmodus vorgesehen ist, die neben den diskreten Schaltstellungen ($P_{1-n}$) für das störungsabhängige Durchschalten der Empfangssignale (5) zum Empfänger (3) bei jedem Durchlauf der Schaltstellungen mindestens einmal eingenommen wird, während der zyklische Weiterschaltmodus unterbrochen ist, und wobei
- die logische Schalteinrichtung (2) bei Eingang des Adressignals (19) kontinuierlich das stärkste Empfangssignal zum Empfänger (3) durchstellt, aber bei Auftreten einer Störung und deren Anzeige im Diversityprozessor (4) von dem Maximalpegel-Schaltmodus wieder in den zyklischen Weiterschaltmodus zurückschaltet.

**gekennzeichnet durch die folgenden Merkmale:**

- es sind Signalverzweigungen vorgesehen, mit denen ein Anteil des Empfangssignals (5) aus dem Signalpfad entnommen und einem separat arbeitenden Maximalpegelindikator (39) zugeführt wird,
- der Maximalpegelindikator parallel zum Signalpfad des Empfangssignals angeordnet ist, und der kontinuierlich dasjenige unter den Antennensignalen ($A_{1-n}$) ermittelt, das den aktuell größten Pegel hat, und der die diesem Signal zugeordnete Maximalpegel-Schaltstellung ($S_{max}$) der logischen Schalteinrichtung (2) **durch** kontinuierlichen Vergleich der Antennensignale mit dem zum Empfänger (3) entsprechend der aktuellen Empfangssituation ohne Hilfsmodulation oder Hilfssignaladdition durchgeschalteten Empfangssignal (5) ermittelt,

wobei am Ausgang des Maximalpegelindikators (39) ein Adress-Signal (19) vorliegt, das kontinuierlich aktualisiert und der logischen Schalteinrichtung (2) zugeführt wird.

**2.** Scanning-Diversity-Antennensystem nach Anspruch 1, **gekennzeichnet durch die folgenden Merkmale:**

- der Maximalpegelindikator (39) umfaßt einen Pegelvergleichsschalter (33), einen Pegelindikator (23) und eine Pegelvergleichseinrichtung (8) wobei
- der Pegelindikator (23) zur Feststellung der Pegel der Antennensignale ($A_{1-n}$) bei unterschiedlichen Schaltstellungen ($V_{1-n}$) des Pegelvergleichsschalters (33) innerhalb kurzer, periodisch wiederholter Pegelvergleichsintervalle (6) dient, die in zeitlichen Abständen (7) erfolgen, die in Relation zur Fahrzeugbewegung stehen, und
- die Pegelvergleichseinrichtung (8) zur vergleichenden Erfassung der Empfangssignalpegel und zur Vorgabe der dem größten aktuellen Signalpegel zugeordneten, der aktuellen Empfangssituation entsprechenden Maximalpegel-Schaltstellung ($S_{max}$) am Ende des Pegelvergleichsintervalls (6) dient, die der logischen Schalteinrichtung (2) als Adress-Signal (19) zugeführt wird.
- die logische Schalteinrichtung (2) enthält eine Liste (42) der Schaltstellungsadressen für das zyklische Weiterschalten bei Erkennung einer Störung **durch** den Diversityprozessor (4), wobei die der aktuellen Maximalpegel-Schaltstellung ($S_{max}$) zugeordnete Adresse als Adressignal (19) aus der Logikschaltung (13) in die Liste (42) übernommen und beim zyklischen Durchschalten der Empfangssignale (5) zum Empfänger (3) in kontinuierlich aktualisierter Form mit erfaßt wird.

**3.** Scanning-Diversity-Antennensystem nach Anspruch 2, **dadurch gekennzeichnet, daß** der Pegelindikator (23) als Pegelvergleichstuner (37) nach dem Superhetprinzip mit Mischer (35), ZF-Filter (34) und Gleichrichter (43) ausgeführt ist und durch Zusetzen ein und desselben Oszillatorsignals (40) auf denselben Empfangskanal abgestimmt ist wie der Empfänger (3).

**Claims**

**1.** Scanning diversity antenna system for vehicles having a multi-antenna array (1) with

- at least two antennas,
- a controllable logical switching device (2) to which the antenna signals ($A_{1-n}$) and optionally the linear combinations thereof formed in an antenna matrix are fed and which switches different reception signals (5) to the receiver (3) in different switching positions,
- a diversity processor (4) which is actuated by the receiver (3) with a reception signal (9) derived from the reception signal (5), and which cyclically switches the logical switching device (2) into another switching position in the event of interference being received and
- a signal level comparator (8) which is able to determine a maximum level switching position ($S_{max}$) corresponding to the strongest reception signal and which is additionally taken into consideration when the reception signals (5) are switched through to the receiver (3), while
- in the logical switching device (2) a switchover position ($U_{Smax}$) is provided for switching over into the maximum level switching mode, this position being adopted at least once in addition to the discrete switching positions ($P_{1-n}$) for the interference-dependent switching through of the reception signals (5) to the receiver (3) each time the switching positions are run through, while the cyclic switching mode is interrupted, and
- when the address signal (19) is received the logical switching device (2) continuously switches the strongest reception signal through to the receiver (3) but if interference occurs and is indicated in the diversity processor (4) the device (2) switches back from the maximum level switching mode to the cyclic switching mode,

**characterised by** the following features:

- signal branches are provided by means of which part of the reception signal (5) is removed from the signal path and supplied to a separately operating maximum level indicator (39),
- the maximum level indicator is arranged parallel to the signal path of the reception signal, and continuously determines the particular one of the antenna signals ($A_{1-n}$) which has the currently highest level, and determines the maximum level switching position ($S_{max}$) of the logical switching device (2) associated with this signal by continuously comparing the antenna signals with the reception signal (5) switched through to the receiver (3) in accordance with the current reception situation without any auxiliary modulation or auxiliary signal addition, whilst at the output from the maximum level indicator (39) there is an address signal (19) which is continuously updated and supplied to the logical switching device (2).

**2.** Scanning diversity antenna system according to claim 1, **characterised by** the following features:

- the maximum level indicator (39) comprises a level comparison switch (33), a level indicator (23) and a level comparator (8), while
- the level indicator (23) serves to determine the levels of the antenna signals ($A_{1-n}$) at different switching positions ($V_{1-n}$) of the level comparison switch (33) within short periodically repeated level comparison intervals (6) which occur at time intervals (7) related to the movement of the vehicle, and
- the level comparator (8) serves to perform comparative determination of the reception signal levels and to prescribe the maximum level switching position ($S_{max}$) at the end of the level comparison interval (6), associated with the current maximum signal level and corresponding to the current reception situation, this maximum level switching position ($S_{max}$) being supplied to the logical switching device (2) as an address signal (19),
- the logical switching device (2) contains a list (42) of the switching position addresses for cyclic switching on detection of interference by the diversity processor (4), while the address associated with the current maximum level switching position ($S_{max}$) is adopted from the logic circuit (13) into the list (42) as an address signal (19) and during the cyclic switching through of the reception signals (5) to the receiver (3) is co-determined in a continuously updated form.

**3.** Scanning diversity antenna system according to claim 2, **characterised in that** the level indicator (23) is constructed as a level comparison tuner (37) on the superhet principle with mixer (35), IF filter (34) and rectifier (43) and by the addition of one and the same oscillator signal (40) is tuned to the same reception channel as the receiver (3).

## Revendications

1. Système d'antennes de balayage en diversité pour véhicules avec une installation multi-antennes (1) comprenant :

- au moins deux antennes,
- un dispositif de commutation (2) logique pouvant être commandé auquel les signaux d'antenne ($A_{1-n}$) et éventuellement leur combinaison linéaire formée dans une matrice d'antennes sont transmis et qui transmet dans différentes positions de commutation des signaux de réception (5) différents au récepteur (3),
- un processeur de diversité (4) commandé par le récepteur (3) avec un signal de réception (9) dérivé du signal de réception (5) et qui, en cas de perturbations de la réception, commute de manière cyclique l'installation de commutation logique (2) dans une autre position de commutation, et
- un dispositif de comparaison du niveau de signal (8), qui peut déterminer une position de commutation de niveau maximal ($S_{max}$) correspondant au signal de réception le plus fort et qui est pris en compte en supplément dans la transmission des signaux de réception (5) vers le récepteur (3),

dans lequel

- il est prévu dans le dispositif de commutation logique (2) une position de commutation ($U_{Smax}$) pour la commutation dans le mode de commutation de niveau maximal, qui est adoptée au moins une fois lors de chaque passage par les positions de commutation, en plus des positions de commutation discrètes ($P_{1-n}$) pour la commutation en fonction des perturbations des signaux de réception (5) vers le récepteur (3), tandis que le mode de commutation cyclique est interrompu, et dans lequel
- le dispositif de commutation logique (2) transmet au récepteur (3) de façon continue, à la réception du signal d'adresse (19), le signal de réception le plus fort, mais revient du mode de commutation de niveau maximal au mode de commutation cyclique en cas de perturbation et de signalisation de celle-ci dans le processeur de diversité (4),

**caractérisé en ce que** :

- il est prévu des ramifications de signal avec lesquelles une partie du signal de réception (5) est prélevée du trajet de signal et amenée à un indicateur de niveau maximal (39) fonctionnant séparément,
- l'indicateur de niveau maximal est disposé parallèlement au trajet du signal de réception, et détermine en continu celui des signaux d'antenne ($A_{1-n}$) ayant actuellement le niveau le plus élevé, et détermine la position de commutation de niveau maximal ($S_{max}$) du dispositif de commutation logique (2) associée à ce signal en comparant en continu les signaux d'antenne avec le signal de réception (5) transmis au récepteur (3) en fonction de la situation de réception actuelle sans modulation auxiliaire ni addition de signal auxiliaire, un signal d'adresse (19) actualisé en continu et transmis au circuit de commutation logique (2) étant présent à la sortie de l'indicateur de niveau maximal (39).

2. Système d'antennes de balayage en diversité selon la revendication 1, **caractérisé en ce que** :

- l'indicateur de niveau maximal (39) comprend un commutateur comparateur de niveau (33), un indicateur de niveau (23) et un dispositif de comparaison de niveau (8),
- l'indicateur de niveau (23) sert à déterminer le niveau des signaux d'antenne ($A_{1-n}$) dans différentes positions de commutation ($V_{1-n}$) du commutateur comparateur de niveau (33) pendant des périodes de comparaison du niveau (6) courtes et répétées périodiquement, qui existent à des intervalles (7), en relation avec le déplacement du véhicule, et
- le dispositif comparateur de niveau (8) sert à la détection comparative des niveaux du signal de réception et à la fixation de la position de commutation de niveau maximal ($S_{max}$) associée au niveau de signal actuel le plus élevé et correspondant à la situation de réception actuelle à la fin de la période de comparaison du niveau (6), qui est transmise au dispositif de commutation logique (2) comme signal d'adresse (19),
- le dispositif de commutation logique (2) contient une liste (42) des adresses des positions de commutation pour la commutation cyclique en cas de détection d'une perturbation dans le processeur de diversité (4), l'adresse associée à la position de commutation de niveau maximal ($S_{max}$) actuelle étant ajoutée à la liste (42) à partir du circuit logique (13) comme signal d'adresse (19) et prise en considération sous une forme actualisée en continu lors de la transmission cyclique des signaux de commutation (5) vers le récepteur (3).

3. Système d'antennes de balayage en diversité selon la revendication 2, **caractérisé en ce que** l'indicateur de niveau (23) est réalisé comme un syntoniseur comparateur de niveau (35) selon le principe du superhet avec un mélangeur (35), un filtre FI (34) et un redresseur (43) et syntonisé sur le même canal de réception que le récepteur (3) par addition d'un seul et même signal d'oscillateur (40).

9
3
40
4
5
1
31
28
P3
P2
P1
2
A3
A2
A1

Fig. 1a

3
40
4
5
1
USmax
31
P3
P2
P1
2
28
19,
Smax
23
8
39
33
V3
V2
V1
12
A3
A2
A1

Fig. 1b

1
A3
A2
A1
2
P3
P2
P1
31
5
3
40
4
38
28
33
V3
V2
V1
40
37
36
35
34
43
8
12

Fig. 2a

16
16
6
6
7
7
7

Fig. 2b

3
9
43
34
35
36
37
40
4
10
41
17
20
15
11
7
t
18
15
13
8
19
5
1
31
P4
P3
P2
P1
28
2
30
S3
S2
S1
33
V3
V2
V1
12
A3
A2
A1

Fig. 3

1
A4
A3
A2
A1
1, 2
2
32a
2a
Smax,
S1,..S4
31
5
3
40
9
4
28
32b
30
2b
19,
Smax
12
8
15
13
10
18
7
11
t
15

Fig. 4

Relative Empfangssignalpegel in dB aus 2 Schaltstellungen und der jeweils größere Empfangspegel über einer relativen Wegstrecke bezogen auf die Wellenlänge

größtes Signal aus Schaltstellungen 1 und 2
Störpegel
Signal aus Schaltstellung S2
Signal aus Schaltstellung S1
Smax = S2
Smax = S1
Smax = S2
Smax = S1
Smax = S2
Smax = S1
Smax = S2
Smax = S1
Smax = S2
0
-10
-20
-30
-40
-50
2
2.5
3
3.5
4
4.5
5
relative Wegstrecke bezogen auf die Wellenlänge


Fig. 5